(19) Europäisches Patentamt
European Patent Office
Office européen des brevets

(11) Publication number: **0 684 285 A1**

# (12) EUROPEAN PATENT APPLICATION

(21) Application number: **94114107.9**

(22) Date of filing: **08.09.94**

(51) Int. Cl.[6]: **C08L 69/00**, C08G 81/00, C08G 63/64, C08G 63/84

(30) Priority: **27.05.94 IT MI941090**

(43) Date of publication of application: **29.11.95 Bulletin 95/48**

(84) Designated Contracting States: **DE ES FR GB IT NL PT**

(71) Applicant: **ENICHEM S.p.A.**
**Piazza della Repubblica, 16**
**I-20124 Milano (IT)**

(72) Inventor: **Pippa, Roberto**
**Via Perosi Nr. 14**
**I-30033 Noale (Venezia) (IT)**
Inventor: **Ignatov, Vladimir**
**Akademika Pavlova U1, 40**
**Flat 108**
**RU-121552 Moscow (RU)**
Inventor: **Moro, Alessandro**
**Via Molinella 37**
**I-Cazzago Di Pianiga (Venezia) (IT)**
Inventor: **Tartari, Vittorio**
**Via Giorgione Nr.16**
**I-Treviso (IT)**
Inventor: **Carraro, Claudio**
**Via Caltana Nr. 12/1**
**I-Mirano (Venezia) (IT)**
Inventor: **Savadori, Aurelio**
**Via Don Cesana, 1/10**
**I-Bellinzago Lombardo (MI) (IT)**
Inventor: **Berti, Corrado**
**Via Gerardi, 8**
**I-Lugo (RA) (IT)**
Inventor: **Pilati, Francesco**
**Via Galeotti Nr. 12**
**I-Bologna (IT)**

(74) Representative: **Weinhold, Peter, Dr.**
**Patentanwälte**
**Dr. Weinhold, Dannenberg,**
**Dr. Gudel, Schubert**
**Siegfriedstrasse 8**
**D-80803 München (DE)**

## (54) Process for the preparation of compatible thermoplastic compositions from polyesters and polycarbonates.

(57) A process for the preparation of a thermoplastic polymeric composition, homogeneous in the molten state, starting from aromatic policarbonates and polyesters, which comprises contacting in the molten state an aromatic polycarbonate and an aromatic polyester, in the presence of a catalytic component consisting of at least one metallic salt or complex, soluble in the polycarbonate or polyester or in the mixture of the two in the molten state, selected from the group comprising:

i) the soluble salts or complexes of a metal selected from lanthanium or other elements of the group of lanthanides (or rare earth metals),

ii) the salts or complexes of a metal selected from the metal of groups IIA, IIIA, IVA, VA of the periodic table, or from transition metals, which metallic salts or complexes include at least one anion deriving from a carboxylic acid, or a bidentate anionic ligand;

said catalytic component being added in a quantity of from 0.005 to 0.5 parts per 100 parts by weight of the mixture consisting of polyester and polycarbonate.

The thermoplastic polymeric compositions obtained with said process have a good light transparency, excellent processability and stability in the molten state, high thermal resistance and resistance to solvents.

EP 0 684 285 A1

FIGURE 1

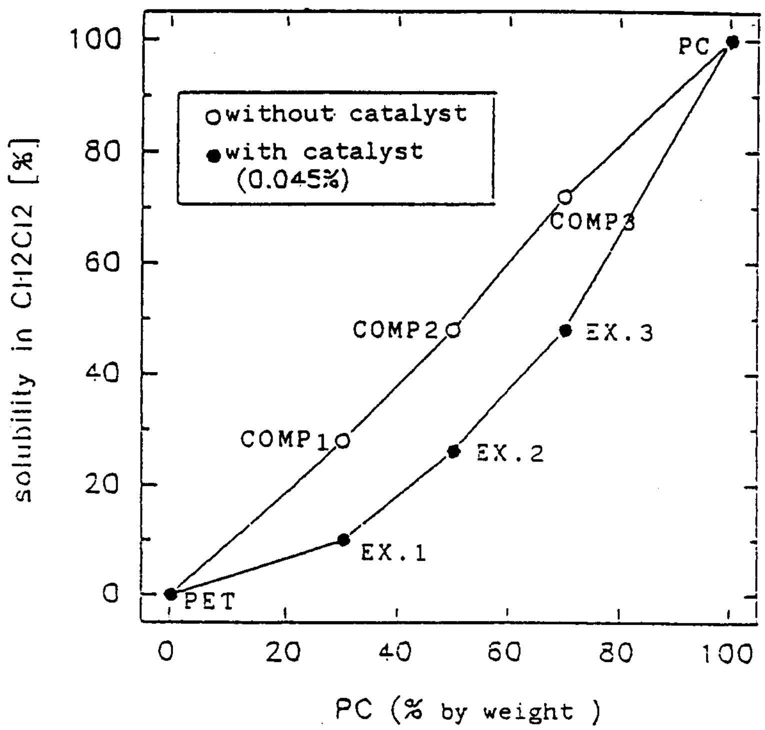
without catalyst
with catalyst
(0.045%)
solubility in CH2Cl2 [%]
PC (% by weight )
PC
PET
COMP1
COMP2
COMP3
EX.1
EX.2
EX.3
0
20
40
60
80
100

The present invention relates to a process for the preparation of compatible thermoplastic compositions from polyesters and polycarbonates.

In particular, the present invention relates to a process for the preparation of thermoplastic polymeric compositions based on polyesters and polycarbonates having an improved combination of chemical, mechanical and rheological properties with respect to each single polymeric component.

Thermoplastic polymeric materials have found wide commercial use thanks to the possiblity of producing a large number of articles using industrial processing technologies such as moulding, blowing, extrusion and the like, all based on the manipulation of the polymer in the molten state. Many of these materials have excellent mechanical, chemical, thermal and rheological properties such as rigidity, toughness, high deformation temperature, resistance to solvents and aggressive agents, fluidity of the molten state, high dielectric constant and others.

It frequently happens that the excellence of a polymeric material in one or more properties is accompanied by an insufficient performance in other technologically important properties which consequently prejudices the applicative potentiality of the material. In fact a plastic material with a high technological value must be characterized by a satisfactory combination of properties to allow it to be processed and used in different environments and under different conditions.

As a result of this requirement, a great research effort has recently been made in order to obtain mixtures including two or more polymers which contemporaneously have the advantages of the single constituents, thus compensating the disadvantages of each of these (synergism). It is known, however, that for thermodynamic reasons, the miscibility of two polymers having a different structure is generally very limited and the so obtained mixtures are biphasic. It has also been observed that the final properties of a polymeric mixture essentially depend on the micromorphology of the mixture itself.

Thermoplastic polyesters, and in particular polyethyleneterephthalate (abbreviated PET) and polybutyleneterephthalate (abbreviated PBT), and aromatic polycarbonates (PC), especially those based on "bisphenol A", each have several excellent properties and have been used in the past in attempts to obtain polymeric mixtures with a high technological value.

In particular it has been found that the resistance to atmospheric agents of polycarbonate can be improved by adding small quantities of polyesters such as PET or PBT. On the other hand it has been noted that the addition of smaller quantities of an aromatic polycarbonate to PET produces an improved shock resistance.

The above mixtures do not generally show an overall good combination of properties. Even more complex is the behaviour of mixtures of polycarbonate-polyester containing comparable quantities of the two polymers. It is thought that one of the reasons for this disadvantageous behaviour derives from the physico-chemical incompatibility of polycarbonates and polyesters, which does allow a high dispersion to be obtained of one polymer in the other. This particularly occurs in the case of mixtures of PET with polycarbonates based on bisphenol A, which are, in principle, of great technological interest. European patent application, publication number 528462, for example, describes polycarbonate-polyester toughned mixtures having a good resistance to solvents and moisture, which contain an ethylene copolymer having side-chain epoxy groups. These mixtures, however, do not have a satisfactory combination of mechanical properties because of the insufficient reciprocal compatibility of polyester and polycarbonate.

Various other documents have also been published on polycarbonate-polyester mixtures containing an elastomeric compound or olefinic copolymer as third component, such as for example U.S. patents 4.522.979, 4.764.556, 4.897.448, 4.629.760, or PCT patent application No 91/15545 or again European patent application 180.648, just to mention a few, which claim improved properties such as shock resistance, chemical resistance or resistance to solvents of the mixtures. None of these documents, however, proposes a method for overcoming the disadvantages deriving from the incompatibility of the two main components of the mixtures.

It is known that compositions based on polycarbonates and polyesters brought to the molten state, at temperatures higher than 200 °C, sometimes bring about transesterification reactions between ester and carbo nate groups. These reactions may occur, for example, during the processing in the molten state of the compositions and are induced by metallic or acid-type residues deriving from the catalysts of the industrial processes for the production of polyester and/or polycarbonate, which are usually not removed from the polymers. This reaction causes the progressive production of ester-carbonate copolymers, with the formation initially of block copolymers and subsequently of the statistic copolymer. The final result of this process is the production of a semi-compatible or even homogeneous mixture having peculiar characteristics. Various publications have been made on the study of transesterification reactions in polycarbonate-polyester mixtures in the molten state, such as the works of J.W. Barlow et al. published in the "Journal of Applied Polymer Science" in volume 22, page 2155 (1978) and volume 23, page 85 (1979) respectively.

These publications also suggest the formation of block polyester-polycarbonate copolymers, of which the average dimensions of the blocks depend on the residence time of the mixture in the molten state.

It has generally been observed that the times required for obtaining a copolymer with a sufficiently high degree of transesterification (short blocks or statistic copolymer) are rather high. Inhibitors and stabilizers, which also have the capacity of reducing the transesterification activity, are added, at the end of the synthesis process, to many commercial polyesters and polycarbonates even if they contain catalytic residues. In addition, many catalytic systems used for the preparation of polyester such as $Sb_2O_3$, although remaining inside the polymer, however, do not show a sufficient velocity for the industrial preparation of ester-carbonate copolymers by transesterfication in the molten state.

P. Godard et al., in his publications in the "Journal of Polymer Science: Polymer Chemistry" Vol. 24 (1986), pages 3301-3313 and 3315-3324, describes the transesterification reaction in a mixture in the molten state of PET and a polycarbonate based on bisphenol A. In this publication it is pointed out that during the mixing in the molten state of a commercial PET with polycarbonate, transesterification reactions do not extensively occur in reasonable times, and it is necessary to induce the reaction by adding catalytic quantities of titanium tetrabutylate, which is a known transesterification catalyst with a high activity, to the mixture. Although satisfactory for analytic and research purposes, the use of this catalyst causes problems in equipment for industrial extrusion, normally used for preparing polymeric mixtures in the molten state, as its high activity creates problems of dosage and control of the degree of transesterification. In fact, in the presence of titanium tetrabutylate, mixtures of PET and polycarbonate rapidly form a statistic copolymer, making it difficult to control the process parameters for the industrial production of copolymers which are formed of blocks of polyester and polycarbonate having a controlled average length, and which often have a complex of properties of technological interest which are higher than both the physical mixture of the two initial homopolymers, and the statistic copolymer obtained after extensive transesterification. In addition, the same publication points out the presence, which cannot be neglected, during transesterification in the molten state, of secondary reactions of degradation, with a considerable deterioration in the quality of the final product.

Publication "C.Berti et al., Die Makromoleculare Chemie, IE., Verlag Editore", vol. 193 (1992), pages 1665-1677, further confirms the presence of secondary reactions which cause a substantial modification of the transesterification product between PET and aromatic polycarbonates, when this reaction is carried out with catalysts commonly used for the purpose such as titanium tetrabutylate. In this case reactions occur which cause the formation of cyclic carbonates and ether groups in the polymeric chain.

A process for the preparation of a block copolymer by the transesterification of a polycarbonate and an aromatic polyester is described in the publication: "F. Pilati et al., Preprint of the Fourth European Symposium on Polymer Blends, Capri, Italy, May 24-26, 1993", page 173, which indicates the use of a particular polyester obtained by the condensation of a glycol and an aromatic diacid under the normal conditions for obtaining a polyester in bulk, in the presence of a catalyst based on a metal selected from the group of lanthanides. This publication, however, does not consider the problem of transesterification between polyesters and polycarbonates generally obtained with common polymerization processes.

There is therefore a great necessity for further improvements in the field of thermoplastic compositions based on polyesters and aromatic polycarbonates.

It has now surprisingly been found by the Applicant that the above inconveniences can be advantageously overcome by a process for the preparation of thermoplastic compositions based on aromatic polyesters and polycarbonates, which includes mixing polymers in the molten state in the presence of particular catalytic agents.

The first aspect of the present invention therefore relates to a process for the preparation of a thermoplastic polymeric composition, homogeneous in the molten state, starting from aromatic polycarbonates and polyesters, having an improved combination of mechanical, chemical, thermal and electrical properties and a high stability during processing in the molten state, which process comprises contacting in the molten state:

(a) at least one aromatic polycarbonate basically consisting of repetitive units of the following general formula (I):

$$-(Ar-O-\overset{\overset{\displaystyle O}{\|}}{C}-O-)- \qquad (I)$$

wherein "Ar" is a divalent aromatic radical having from 6 to 30 carbon atoms, deriving from a compound

having two phenolic hydroxylic groups,

(b) at least one aromatic polyester,

for a period at least sufficient to make the molten mixture of (a) and (b) homogeneous, in the presence of a catalytic component (c) consisting of at least one metallic salt or complex selected from the group comprising:

i) salts or complexes of a metal selected from lanthanium and other elements of the group of lanthanides (or rare earth metals), the atomic numbers of which are between 58 and 71 in the periodic table, said metal salts or complexes being soluble in (a) and/or in (b) or in the mixture of (a) and (b) in the molten state;

ii) salts or complexes of a metal selected from groups IIA, IIIA, IVA, VA of the periodic table, and the transition metals, which metallic salts or complexes are soluble in (a) and/or (b) or in the mixture of (a) and (b) in the molten state, and including at least one anion deriving from a carboxylic acid, or a bidentate anionic ligand;

said catalytic component being added in a quantity of from 0.005 to 0.5 parts per 100 parts by weight of the mixture consisting of (a) and (b).

The thermoplastic polymeric compositions obtained from the above process, which are also claimed in the present invention, are homogeneous compositions in the molten state, which have an interesting combination of physico-chemical and technological properties. They particularly have a good transparency to light, an excellent processability in the molten state and high resistance to heat and solvents.

The term "homogeneous compositions in the molten state" as used in the present description and in the claims, refers to the fact that in the compositions according to the process of the present invention there is no apparent separation, in the molten state, of the polymeric mass into a phase rich in polyester and another rich in polycarbonate. On the other hand, the present invention also includes compositions obtained according to the above process, which have in addition other polymeric or non-polymeric components insoluble in the homogeneous mass consisting of polycarbonate and polyester.

The Applicant has also found that one or both components (a) and (b) of the above process can totally or partly consist of polycarbonates or polyesters respectively recovered from waste material. The present invention consequently further relates to a process for the recovery and recycling of waste polycarbonates or polyesters, wherein said waste polycarbonate or polyester is put in contact with a polyester or polycarbonate respectively in accordance with what is specified for the previous process.

In accordance with what has been previously defined, the catalytic component (c), or catalyst, of the process of the present invention must be soluble in at least one of components (a) or (b), or in their mixture, in the molten state. The term "soluble" as used in the present context in relation to the catalytic component (c), refers to the dissolution of catalytic component (c), in the quantities effectively used according to the present process, in the molten polymeric phase. The catalytic component (c) dissolved in the polymeric phase will no longer be identifiable as a separate phase either in the molten or solid state, by any test using an optical method.

In accordance with the present invention, the catalytic component (c) can be selected from the metallic salts or complexes soluble in (a) and/or (b) or in the mixture of (a) and (b) in the molten state, of metals of the group of lanthanides. More specifically, this metal is selected from lanthanium, neodymium, praseodymium, samarium, europium, gadolinium, terbium, disprosium, holmium, erbium, tulium, ytterbium, and lutetium, and preferably from lanthanium, cerium, samarium or europium.

The metallic salt or complex of a lanthanide, used as component (c) in the present invention, preferably includes at least one organic anion deriving from the neutralization of an aliphatic or cyclo-aliphatic carboxylic acid such as, for example, acetate, chloroacetate, propionate, butyrate, hexanoate, decanoate, cyclohexanoate, or aromatic, such as benzoate, chlorobenzoate, hydroxybenzoate, toluate, ethylbenzoate, octylbenzoate, 4-phenylbenzoate, naphthoate, 2-furancarboxylate, phthalate, or deriving from a sulphonic acid, sulphinic acid, phosphonic or phosphinic acid, or an alkoxide, aryloxide or carbamate anion. Unlimiting examples of anions belonging to some of these latter groups are the ions: benzenesulphonate, benzenephosphonate, methoxide, ethoxide, propoxide, isopropoxide, butoxide, phenate, 2,6-dimethylphenate, ethylcarbamate, phenylcarbamate.

Compounds which can be used in relation to catalytic component (c) for the process of the present invention can also be organic salts having the following formula (II):

$MY_pL_q$ (II)

wherein: each "p"Y independently represents an organic anion deriving from an aliphatic, cycloaliphatic or aromatic carboxylic acid;

M is a metal selected from the metals of groups IIA, IIIA, IVA, VA of the periodic table, the transition metals, and the metals of the group of lanthanides;

each "q"L is independently a neutral ligand and "p" is the oxidation state of the metal M and may generally have values of from 2 to 4 depending on the specific metal M, and "q" is an integer so that the sum of "p + q", has values of between "p" and 8, preferably between "p" and 6, including extremes.

$Y_p$ can also be an anion of an aromatic dicarboxylic acid such as phthalic acid, and can represent, for example when "p" = 3, the combination of an aromatic dicarboxylate with a monofunctional anion.

The metal M of the above formula (II) is preferably selected from germanium, tin, lead, or from the lanthanides: lanthanium, cerium, samarium or europium. Particularly preferable for the purposes of the present invention are the metallic salts or complexes included in the above formula (II) wherein M is lanthanium, lead or samarium.

Typical examples of T deriving from aromatic carboxylic or dicarboxylic acids included in the purposes of the present invention are the anions: benzoate, chlorobenzoate, hydroxybenzoate, toluate, ethylbenzoate, octylbenzoate, 4-phenylbenzoate, naphthoate, 2-furancarboxylate, phthalate, and the like. Benzoate and naphthoate ions are preferable for the purposes of the present invention.

The neutral ligands L of the above formula (II) can be all those generally known by experts of inorganic and organometallic chemistry of metals M as defined above. In addition to $H_2O$ and $NH_3$ which are the commonest neutral inorganic ligands, also included in the present invention are organic ligands consisting of non ionic molecules containing at least one heteroatom such as N, P, O, or S, preferably N, which heteroatom has at least one electronic doublet available for co-ordination. These ligands act as co-ordinators of the metal M by means of basic Lewis centres situated on the heteroatoms. Basically all of the different groups of organic neutral ligands of the known art which can form stable complexes with one of the metals M defined above, can be used for the purposes of the present invention. Many of these ligands are mentioned, for example, in publication "Gmelin Handbuch der Anorganischen Chemie, 8[a] Edition, Springer-Verlag, Berlin (1980-1986), the contents of which, with reference only to the organic neutral ligands containing heteroatoms and the formation of complexes with any of the metals M, form an integral part of the present application as reference.

Among the above neutral ligands L, bi- or polydentate ligands are preferred which are characterized by two or more heteroatoms of the group N, P, O and S situated in such positions as to be co-ordinated to the same metall atom M, or, in the case of two heteroatoms, usually in position 1,4 or 1,5 with respect to each other. Typical examples of these ligands, which, however, do not limit the present invention in any way, are $\beta$-diketones or $\beta$-ketoesters such as methyl acetylacetone or acetylacetate, o-dipyridyl, 8-hydroxyquinoline or crown ethers such as for example compounds called benzo-12-crown-4 and benzo-16-crown-5.

In the case of complexes where there is at least one polydentate ligand, the symbol "q" in formula (II) represents the number of ligands and is lower than the number of co-ordinated atoms.

Further compounds used as component (c) of the compositions of the present invention comprise complexes of metals M as defined above with one or more di- or polydentate ionic ligands. Among these the complexes having the general formula (III) are preferred:

$B_iM'L'_j$ (III)

wherein M' and L', respectively, have the same meaning as specified above for the metal M and the neutral ligand L in formula (II), B is a bidentate anionic ligand, "i" is the state of oxidation of the metal M' and may generally assume values of from 2 to 4 depending on the specific metal M, and "j" is an integer so that the sum "2i+j", has values of between "2i" and 8, preferably between "2i" and 6, including extremes.

The bidentate anionic ligands B of the metal complexes of the present invention are organic anions which are capable of co-ordinating with the metal M to form cyclic structures generally having from 5 to 7 atoms in the cycle, including the metal M.

Typical but not limiting examples of bidentate anionic ligands B, which can be used to form complexes having general formula (III) are salicylates and acylsalicylates such as acetylsalicylate, $\beta$-diketonates such as acetylacetonate, orthoformylphenolates, 2-pyridylcarboxylates, aminoacetates, 3-aminopropionates, 2-aminophenolates, etc.

Finally the present invention also relates to the catalytic components (c) consisting of di- or polynuclear compounds of metals M as defined above, which belong to the groups previously described, even if not rigorously included in the previous general formulae (II) and (III).

Among the previous compounds, the following are particularly preferred: La(acetylacetonate)$_3$, Pb(acetylacetonate)$_3$, Eu(acetylacetonate)$_3$dipyridyl, Eu(2-formylphenolate)$_3$,Sm(acetylacetonate)$_3$, Sm-

(acetylacetonate)$_3$-dipyridyl, Sm(2-formylphenolate)$_3$ and La(2-formylphenolate)$_3$.

The metallic salts or complexes which can be used as component (c) in the process of the present invention, are generally known compounds which can easily be prepared with the known techniques of inorganic and organometallic chemistry. Many of the metallic compounds included in one of the previous formulae (II) and (III) are commercial products available on the market. If there is no availability, the preparation of the compounds of the above formulae can be carried out, in the various cases, following one of the known general methods of inorganic and organometallic chemistry, described, for example in the publication "Gmelin Handbuch der Anorganischen Chemie" previously quoted. Other methods of preparation are described, for example, in "Nouveau Traite de Chimie Minerale" Masson & C. Publisher, France (1959).

The catalytic component (c) of the present invention, is generally used in quantities of between 0.005 and 0.5 by weight with respect to the weight of the mixture consisting of (a) and (b). (c) is however preferably used in the compositions of the present invention in quantities of between 0.01 and 0.1% by weight. In these concentrations, it presents a sufficient catalytic activity to allow the production of the required degree of transesterification in the residence times of the compositions normally used in conventional industrial extruders.

Aromatic polycarbonates (a) which can be used for the preparation of the compositions of the present invention are polymeric esters of a carbonic acid with a compound having at least two hydroxylic groups of the phenolic type (also indicated below with the name aromatic diol).

They can be prepared by the reaction of an aromatic diol with a precursor of a carbonic ester such as phosgene or a haloformiate, which can also be a chloroformyl-terminated oligomeric polycarbonate, or a dialkylcarbonate or a diarylcarbonate such as diphenylcarbonate.

Preferred aromatic diols for preparing the polycarbonates of the present invention are those having the general formula:

HO--Ar--OH (IV)

wherein "Ar" has the meaning previously defined in formula (I) and can be, for example, ortho- para- or meta-phenylene, methylphenylene, chlorophenylene, dimethylphenylene, phenylenedimethylene, diphenylene, methanediphenylene, 2,2-propandiphenylene, diphenyleneether, diphenylenesulphone, naphthalene, anthracene and the like. "Ar" can also be a heteroaromatic divalent residue such as for example, pyridine, thiophene, furan and the corresponding alkyl or halosubstituted nuclei.

Typical aromatic diols are: 2,2-bis(4-hydroxyphenyl)propane (bisphenol A); 2,2-bis(3,5-dimethyl-4-hydroxyphenyl)propane; 2,2-bis(4-hydroxyphenyl)pentane; bis(4-hydroxyphenyl)-methane (bisphenol F); 2,4'-dihydroxyphenylmethane; hydroquinone, resorcinol; 1,1-bis(4-hydroxyphenyl)ethane; 2,2-dihydroxydiphenyl; 2,6-dihydroxynaphthalene, 2,7-dihydroxynaphthalene, 1,1'-dihydroxy-4,4'-dinaphthyl; 4,4'-dihydroxydiphenylsulphone; 2,4'-dihydroxydiphenylsulphone; 4,4'-dihydroxydiphenylether, 4,4'-dihydroxy-3,3'-dichlorodiphenylether, etc.

The polycarbonates of the present invention can also be copolymers containing units deriving from two or more of the above aromatic diols.

As well as the units deriving from the above aromatic diols, the polycarbonates of the present invention can also contain lesser quantities of polyfunctional units, or branching agents, deriving from aromatic polyols or, more generally, from compounds characterized by at least three functional groups, the same or different, selected from the groups -OH, -COOH, $-SO_3H$, -COCl. For example, branching agents which can be used are the compounds described in the following Italian patent applications: 2358 A/84, 21509 A/85, 23285 A/85, 23286 A/85, 21231 A/86, 21230 A/86, 21233 A/86, 20927 A/87, 20928 A/87, 20929 A/87.

The compositions of the present invention preferably contain a polycarbonate based on bisphenol A.

The aromatic polycarbonates suitable for the compositions of the present invention can be prepared using any one of the known processs, according to what is described, for example, in U.S. 4.018.750 relating to interfacial polymerization, using phosgene as precursor of the carbonic acid, or according to U.S. 3.153.008 which relates to a method for transesterification in the molten state. The polycarbonates prepared according to one of the above methods generally have a weight average molecular weight $M_w$ of between 10,000 and 50,000 and preferably between 15,000 and 30,000.

The aromatic polyester, used as component (b) in the compositions of the present invention, is any thermoplastic polyester deriving from the polycondensation of a diol or its precursor with an aromatic dicarboxylic acid or its precursor, having a number average molecular weight $M_n$ of between 10,000 and 40,000 and preferably between 15,000 and 30,000.

A vast list of aromatic polyesters corresponding to the previous definition is provided in the publication "Encyclopedia of Polymer Science and Engineering", by H.F. Mark et al., J. Wiley Ed., New York (1988), volume 12, pages 9-13.

Aromatic dicarboxylic acids used to obtain aromatic polyesters suitable for the present invention are generally compounds having the general formula:

HOOC-A-COOH (V)

wherein the symbol "A" represents a divalent aromatic residue having from 6 to 20 carbon atoms and can be, for example, ortho- para- or meta- phenylene, methylphenylene, chlorophenylene, dimethylphenylene, phenylenedimethylene, diphenylene, methandiphenylene, 2,2-propandiphenylene, diphenylene-ether, diphenylenesulphone, naphthalene, anthracene and the like.

"A" can also be a divalent heteroaromatic residue such as pyridine, thiophene, furan the corresponding alkyl or halosubstituted nuclei.

Preferred dicarboxylic acids for the purposes of the present invention are phthalic acids and naphthalene-dicarboxylic acids. Particularly preferred is terephthalic acid.

The term aromatic dicarboxylic acids, as used in the present invention, is also considered to comprise the different mixtures between two or more dicarboxylic acids included in the previous formula, as well as the mixtures of one or more of these dicarboxylic acids with up to 20% in moles, preferably up to 10% in moles of an aliphatic dicarboxylic acid such as for example succinic acid or adipic acid. Also included in the term aromatic dicarboxylic acids are the mixtures of the above compounds with up to 20% in moles, preferably up to 10% in moles, of hydroxyaromatic derivatives such as, for example, meta and parahydroxybenzoic acids, hydroxynaphthoic acids and 2-hydroxyethylbenzoic acid.

For the preparation of aromatic polyesters suitable for the compositions of the present invention, the precursors of the above dicarboxylic acids can also be used in which one or both carboxylic groups are esterified with a volatile alcohol, or acylic halides, preferably chlorides, of the acids. The latter are particularly used for the production of aromatic polyesters by polycondensation in solution or in suspension. Diesters obtained by the esterification of the carboxylic acids with volatile alcohols or which can however be easily removed by evaporation can be particularly used for the preparation of the polyesters of the present invention. Typical derivatives of aromatic dicarboxylic acids suitable for the present invention are the diesters of aliphatic alcohols having from 1 to 5 carbon atoms such as, for example, dimethylesters, diethylesters and dibutylesters of the acids having the previous formula.

Diols suitable for the preparation of the polyesters (b) of the compositions of the present invention are all the usual aliphatic or aryl-aliphatic compounds having 2 hydroxylic groups per molecule which are generally used for the preparation of the polyesters of the known art. These compounds are also usually called glycols and enable the production of linear polyesters.

Diols which can be used to prepare the polyesters (b) are, for example, aliphatic glycols having the general formula:

$HO-(CH_2)_tOH$ (VI)

wherein "t" is an integer between one and 10.

Typical diols are, for example, ethylene glycol, diethylene glycol, triethylene glycol, tetramethyleneglycol, hexamethylene glycol, decamethylene glycol, neopentyl glycol, 1,4-cyclohexandiol and 1,4-dimethylolcyclohexane. Ethylene glycol is particularly preferred.

The term diols, as used in the present invention, also comprises mixtures of glycols with lesser quantities, generally up to 10% by weight referring to the glycol, of triols and polyols with a higher functionality when the production of branched thermoplastic polyesters is desired.

However, both linear and branched thermoplastic polyesters obtained according to the present process are comprised in the purposes of the present invention.

Finally, diols or polyols obtained by the oligomerization or polymerization of glycols such as diethylene glycol or propylene glycol, or olefinic oxides such as ethylene oxide or propylene oxide can be used as the glycol component, preferably mixed with one or more of the diols mentioned above. These diols or polyols are generally characterized by sequences of repetitive units having the following structure (VII):

$--(-O-CH_2-CHR-)_r--$ (VII)

wherein R is hydrogen or methyl and "r" is an integer between 2 and 500, preferably between 2 and

300.

The polyesters (b) suitable for the compositions of the present invention can be prepared by any of the known methods. A detailed description of the methods and catalysts generally used for the preparation of the polyesters of the known art is provided in the publication "Comprehensive Polymer Science", Ed. G.C. Eastmond et al., Pergamon Press, Oxford 1989, vol. 5, pages 275-315, whose contents should be considered an integrant part of the present patent application as reference. Aromatic polyesters are normally prepared with a method carried out in two steps, in the first of which the diacid or esterified derivative is reacted with the excess diol removing the water or alcohol formed during the reaction. In the second step, which is carried out at temperatures higher than 200 °C, generally between 230 and 290 °C, and under vacuum, the excess diol is removed with the formation of the polyester. The catalysts used both in the first and second steps are usually of an acid nature and can carry out their catalytic function in a single step or in both steps, depending on their nature. Catalysts used for the industrial production of polyesters are for example sulphuric acid, lead, calcium, zinc or manganese acetates, titanium alkoxides, germanium and antimonium oxides, the latter especially for the second polymerization step.

Finally, other aromatic polyesters suitable for the process of the present invention are those obtained, when effectively possible, by the polycondensation of an aromatic diacid and a diol in the presence of compounds consisting of a salt or metallic complex having one of the structures previously described for the above catalytic component (c), which, in this case, has the function of polycondensation catalyst.

Among the numerous polyesters which can be used for the present invention, polyethyleneterephthalate or PET, is particularly preferred, no matter what method is used for the production or origin of this.

The present process enables the production of polymeric compositions starting from aromatic polyesters and polycarbonates, which mainly consist of an ester-carbonate copolymer, preferably block copolymer, which comprises, in addition to the monomeric units characteristic of the original polyester or polycarbonate, also a vast number of monomeric units having formula (VIII):

-[-A-COO-Ar-]- (VIII)

wherein the symbols A and Ar respectively have the same general meaning previously described in formulae (I) and (V).

According to the process of the present invention, the contact between the aromatic polycarbonate (a) and aromatic polyester (b) is preferably carried out by mixing the two components in the molten state, using any of the known methods for mixing thermoplastic polymers in the molten state, provided that this takes place under suitable temperature conditions.

According to a first embodiment of the present invention, the three components (a), (b) and (c), can be premixed in their solid state and then introduced into any known equipment for mixing the polymers in the molten state, for example, extruders, brabenders, etc.

In a second embodiment, the catalytic component (c) can be mixed in its dry state with one of the components (a) or (b), preferably (b), and the resulting mixture mixed in the molten state with the remaining component (b) or (a) and any other possible additives and components.

In a further embodiment, components (a), (b) and (c) can be each fed in different positions of extruding equipment to optimize the rheological characteristics and reactivity of the mixture during the passage from the solid to molten state.

The mixing is generally carried out in the molten state, for times and at temperatures selected and determined each time according to the composition. The temperatures are usually between 200 and 300 °C. Any mixing equipment can be used. The method can be continuous or batch. In particular, single and twin-screw extruders, Banbury and Brabender-type internal mixers and the like can be used. Mixing in an extruder is however preferred.

The mixing times are preferably rapid and can vary from 0.5 minutes to 10 minutes, more preferably from 0.5 minutes to 5 minutes. Although these times are sufficiently rapid to enable the present invention to be advantageously applied to the quantities and productive cycles normally present in industry for the production and transformation of PET, the use of the particular catalytic components (c) previously defined, however, enables an effective and reproducible control of the progression of the transesterification reaction to be carried out in order to obtain at the end the required length and distribution of the respective polycarbonate and/or polyester blocks in the copolymer produced. This control and reproducibility is on the other hand particularly difficult to effect with the usual transesterification catalysts of the known art.

The relative quantities of polycarbonate and polyester are not critical for the purposes of the present invention and can be selected by the operators on the basis of the desired composition in the copolymer to be prepared.

The ratios by weight between polycarbonate and polyester in the process of the present invention are generally within the range 10/90 to 90/10 and are selected each time on the basis of the desired characteristics of the composition and its final uses. This ratio is preferably selected between 15/85 and 40/60.

In a preferred embodiment of the process of the present invention, a composition is prepared which comprises a block copolymer polycarbonate-polyester deriving from the transesterification between the two components (a) and (b), whose average dimension is between 3 and 50, preferably between 10 and 40, monomeric units deriving from the polycarbonate or polyester.

The mixing time is not particularly critical, even though it helps to determine the average dimension of the blocks, together with other process factors such as temperature and shear stress due to the mixing. The Applicant has observed in particular, especially in the case of PET copolymers with polycarbonates based on bisphenol A, that the average dimension of the copolymer blocks controllably diminishes with an increase in the mixing time, or residence time of the molten product in the extruder.

For the purposes of the present invention a process is preferred for preparing compositions containing a linear or branched polycarbonate (a) based on bisphenol A, and an aromatic polyester (b) basically consisting of PET or PBT, in which the ratio by weight (a)/(b) is between 80/20 and 20/80, preferably between 15/85 and 40/60. Compositions comprising PC based on bisphenol A and PET are particularly preferred. Among the latter, of particular interest are compositions consisting of a block copolymer of polycarbonate and PET in which the weight ratio between the blocks is between 15/85 and 40/60, and the average molecular weights of the PET blocks are between 2,000 and 15,000.

According to a particular aspect of the present invention, the process for the preparation of the polyester-polycarbonate compositions described above can be used to recover waste polyester or polycarbonate.

It is known in fact that the possibility of carrying out an efficient and economically advantageous recovery and recycling of widely-used plastic materials, such as polyesters, but also, more recently, polycarbonates, is one of the most important problems for modern polymer industry. Particularly in the case of PET and polycarbonate based on bisphenol A, there is a large accumulation of scraps deriving both from industrial processing and waste materials, mainly consisting of containers for liquid, films or plates. These waste materials cannot simply be reprocessed using the normal techniques as they produce materials which are impure, degraded and of little technological interest. It is therefore evident that a recovery method must be found which produces a final material with characteristics which can still be used industrially.

The Applicant has now found that waste polycarbonates and polyesters can be used for the preparation of compositions containing ester-carbonate copolymers, having improved properties with respect to the orginal scrap polymers.

A further aspect of the present invention therefore relates to a process for the recovery and recycling of waste aromatic polycarbonate and/or polyester, with the production of an ester-carbonate copolymer, which comprises contacting in the molten state:

(a') at least one aromatic polycarbonate basically consisting of repetitive units of general formula (I) as defined above,

(b') at least one aromatic polyester,

for a period which is sufficient to make the molten mixture of (a') and (b') homogeneous, in the presence of a catalytic component (c) consisting of at least one salt or metal complex selected from the group comprising:

i) the salts or metal complexes of a metal selected from lanthanium and other elements in the group of lanthanides (or rare earth metals), having an atomic number of between 58 and 71 in the periodic table, said salts or metal complexes being soluble in (a') and/or (b') or in the mixture of (a') and (b') in the molten state;

ii) the salts or complexes of a metal selected from the metals of groups IIA, IIIA, IVA, VA of the periodic table, or transition metals, said salts or metal complexes being soluble in (a') and/or (b') or in the mixture of (a') and (b') in the molten state, and comprising at least one anion deriving from a carboxylic acid, or a bidentate anionic ligand;

said catalytic component being added in a quantity of from 0.005 to 0.5 parts per 100 parts by weight of the mixture consisting of (a') and (b'), wherein at least one of the components (a') or (b') totally or partly consists of said waste aromatic polycarbonate or polyester respectively.

The present invention preferably relates to a process for the recovery and recycling of waste polyethyleneterephthalate comprising the mixing in the molten state of the latter with an aromatic polycarbonate, preferably deriving from bisphenol A, under the conditions and with the equipment described above.

This recovery and recycling process enables the production of a polymeric material containing a copolymer (block or statistic) with advantageous characteristics compared to the initial recycling materials.

For example, polyethyleneterephthalate bottle scraps can be recovered and recycled with the process of the present invention by mixing with polycarbonate from bisphenol A in the molten state. The quantity of polycarbonate is preferably between 30 and 50% by weight, with respect to the total weight of the mixture of the two polymers. In this way a polymeric material is obtained containing polyester-polycarbonate copolymers, having $T_g$ higher than 90 °C, which is suitable for subsequent moulding and processing to obtain polymeric articles and end-products with characteristics which are basically comparable to those of similar end-products based on commercial PET.

In another preferred embodiment of the present invention, components (a') and (b') of the above process each respectively consist of at least 50% by weight of waste aromatic polycarbonate and at least 50% by weight of waste aromatic polyester.

The ester-carbonate copolymers obtained according to the present recovery and recycling process are preferably block copolymers in which the blocks of polyester have an average molecular weight of between 2,000 and 15,000.

The thermoplastic compositions which can be obtained with the process of the present invention should not be considered as being limited to the single components (a), (b) and (c), but can additionally contain other components or additives capable of giving particular properties for specific uses. Among these, of particular importance are polymeric additives having a toughening function. These are polymers having a glass transition temperature lower than 0 °C, and can be linear block polyolefins or elastomers, or graft or cross-linked copolymers or those known to experts in the field as core-shell.

During the process of the present invention, these components or additives, particularly polymeric additives, can be incorporated in the thermoplastic polymeric composition both by premixing with one or more of the above components (a), (b) or (c), and by the direct addition to the mixture of said components, for example in the melting or mixing zone in the extruder, until a dispersed phase is formed in the main polymeric matrix, and finally also by subsequent addition to the preparation of the ester-carbonate copolymer, by further mixing, preferably in the molten state.

Examples of such polymeric toughening agents are polybutadiene, butadiene-styrene copolymers, butadiene-acrylonitrile, ethylene-propylene rubbers, polyisobutene, polypropylene, polyethylene, unconjugated ethylene-propylene-diene terpolymers (EPDM), polybutylacrylate and other elastomeric acrylic copolymers, ethylene-acrylic acid copolymers, etc. Other examples of toughening agents suitable for the polyesters of the present invention are graft copolymers consisting of a linear matrix composed of one of the previous polymers or copolymers attached to which are blocks deriving from the polymerization of polar or polarizable unsaturated compounds such as, for example, acrylic or methacrylic esters of saturated aliphatic alcohols, vinyl acetate, acrylonitrile, styrene and substituted styrenes.

These polymeric additives can be added to the polyester-polycarbonate compositions of the present invention in a quantity of up to 30% by weight with respect to the weight of components (a), (b) and (c), and preferably in a quantity of between 10 and 25% by weight.

Whereas all the components of the composition can be added at the beginning and directly to the mixing unit, in some cases it is convenient to totally or partly pre-mix one of the components (a), (b) or (c) with the possible additional polymeric additive.

As well as the components specified above, the thermoplastic compositions of the present invention can contain further additives such as, for example, nucleating agents, stabilizers, flame retardant agents, fluidifying agents, antioxidants, pigments, mineral fillers and fibrous reinforcing agents. The compositions or the block copolymers of the present invention can contain one or more of the commonly used additives combined with polyesters of industrial use, as well as those used for polycarbonates or toughening rubbers, when they are present in the mixture with the other components. These additives are generally known to operators in the transformation industry of polyesters and/or polycarbonates, and also their compositions, to obtain in the end-products the particular properties necessary for their specific use.

For example, nucleating agents suitable for PET which can be used in the present compositions are the sodium salts of carboxylic acids.

Examples of stabilizers suitable for use in the compositions of the present invention comprise liquid phosphates and hindered phenols, which can be added to the compositions of the present invention in a quantity which can vary from 0.05 and 2.0% by weight with respect to the total composition. Typical antioxidant additives based on hindered phenols are, for example, commercial products of Ciba-Geigy with the trade-names IRGANOX$^R$ and ULTRANOX$^R$.

Mineral fillers which can be used to increase the stiffness of the thermoplastic compositions usually consist of inert salts such as mica, kaolin, calcium sulphate, titanium oxide, talc, drop glass, aluminium

sulphate, whiskers and similar products.

Examples of fibrous reinforcing agents which can be used in the present invention are glass fibres, rock wool, carbon fibres, organic and inorganic fibres with a high module, metal fibres, etc. Particularly preferred fibrous reinforcing agents are glass fibres, which can be untreated or, even better, treated with silanes or titanates as is known by technicians and the manufacturers of these fibres.

The reinforcing additives can be used in a quantity which is generally not higher than 50% by weight, and preferably, not more than 30% by weight with respect to the total composition.

All of the above additives and other components suitable for the compositions of the present invention can be used in the same proportions and with equally satisfactory results mixed with the block polyester-polycarbonate copolymers as such, which comprise a further aspect of the invention.

The compositions obtained with the process of the present invention, independently of the degree of transesterification which is reached, as such or mixed with additives, can be easily processed by injection or extrusion and are suitable for the different transformation technologies such as injection moulding, thermo-forming, etc. They have a combination of properties which make them suitable for use in the production of moulded articles having a high shock-resistance and module, together with a good thermal resistance.

A particularly advantageous fact is that the process of the present invention enables the production of polymeric compositions which, in common transformation processes, maintain their composition and distribution characteristics for quite a long period allowing various passages to the molten state without great variations in the properties. On the contrary, during the preparation of similar compositions and copolymers as described in the known art, for example in the case of compositions obtained using titanium tetrabutoxide as catalytic component (c), competitive side reactions take place, causing degradation and making it difficult to control the transesterification rate with a consequently poor reproducibility of the desired characteristics of the copolymer.

These properties make the compositions obtained by the process of the present invention advantageous for use in the car-transport industry, for the production of end-products which can be oven painted, parts which come into contact with the engine, household appliances, electronic articles and cup-shaped technical articles in general, boxes, containers, panels, plates, sheets, rods and other shaped articles having a more complex geometry.

The following illustrative examples provide a better understanding for the embodiment of the present invention but do not limit it in any way.

## EXAMPLES

### Characterization of polyester-polycarbonate copolymers

The characterization of the polyester-polycarbonate copolymers obtained according to the following examples, was carried out by using one or more of the methods listed below:

- Solubility in dichloromethane: a weighed quantity of about 1 g of the sample to be characterized is extracted with dichloromethane at reflux temperature in a Soxhlet for 48 hours. At the end, any residue formed is dried under vacuum and weighed to determine the percentage of insoluble polymer.
- Intrinsic viscosity: for all the polymeric samples tested, both PET, PC, and the copolymers of the present invention, the measurement of intrinsic viscosity is carried out within the range 0.3-1 g/100 ml, at 25 °C mixed with tetrachloroethane/phenol 60/40 by weight.
- DSC differential thermal analysis: on a DSC-7 Perkin-Elmer instrument to measure the melting and crystallization points;
- DMTA dynamic-mechanical analysis: on a DMTA instrument of Polymer Laboratories to measure the glass transition temperature $T_g$;
- VICAT: according to regulation ASTM D-1525;
- Heat distortion temperature (HDT): according to regulation ASTM D-648;
- Determination of the average block dimensions in the copolymer: the block copolymer is subjected to selective degradation adding 1 ml of piperidine to about 1 g (exactly weighed) of the product to be degraded (finely ground and suspended in 25 ml of dichloromethane), and leaving the reaction for 1 hr. under stirring and at room temperature. In this way the selective demolition of the PC segments is obtained, which can be easily checked by IR spectroscopy on a certain quantity of the solution, measuring the intensity of the carbonate band at 1774 $cm^{-1}$, until it has completely disappeared. When the demolition of the PC segments is complete, the reaction mixture is poured into 75 ml of methanol, to completely recover also the shorter segments of PET which were possibly soluble in the

mixture of dichloromethane/piperidine. The mixture is filtered on a septum and is then dried in an oven under vacuum. The residue thus obtained is weighed to calculate the relative percentage of PET blocks. The intrinsic viscosity of the residue is then measured, according to the method described above, in order to calculate the average molecular weight of the PET blocks originally present in the copolymer.

In all of the above examples, the polymers subjected to extrusion or other types of mixing in the molten state, were first dried in an oven under vacuum for 16 hours at 120 °C.

Preparation of "samarium tris(acetylacetonate)"

About 100 ml of an aqueous solution containing 7 g of acetylacetone (0.07 moles) are added to a solution of 3 g of samarium trichloride (11.4 mmoles) in 100 of water. The pH of the mixture is brought to a value of between 6.5 and 7 by adding concentrated aqueous KOH, and the whole mixture is kept under stirring for 8 hours. The precipitate thus formed is filtered, washed again with water and dried at 60 °C under vacuum for 14 hours. The solid thus obtained proved to consist of samarium tris(acetylacetonate) [$Sm(AcAc)_3$], with a practically quantitative yield with respect to the initial samarium.

Preparation of "lanthanium tris(acetylacetonate)"

Lanthanium tris(acetylacetonate) [$La(AcAc)_3$] was prepared exactly repeating the process used for samarium tris(acetylacetonate), but using 2.78 g of lanthanium trichloride instead of samarium trichloride. The yield with respect to the initial lanthanium was quantitative.

Preparation of "Lead bis(acetylacetonate"

About 100 ml of an aqueous solution containing 7 g of acetylacetone (0.045 moles) are added to a solution of 4.3 g of lead acetate trihydrate [$Pb(Ac)_2.3H_2O$, 11.4 mmoles] in 100 of water. The pH of the mixture is brought to a value of between 6.5 and 7 by adding concentrated aqueous KOH, and the whole mixture is kept under stirring for 8 hours. The precipitate thus formed is filtered, washed again with water and dried at 60 °C under vacuum for 14 hours. The solid thus obtained proved to consist of lead bis-(acetylacetonate) [$Pb(AcAc)_2$], with a practically quantitative yield with respect to the initial lead.

EXAMPLE 1

0.064 parts by weight of the complex samarium(acetylacetonate)$_3$ are added, by dry mixing, to 100 parts by weight of a commercial polyethyleneterephthalate in granule form, having an intrinsic viscosity of 0.65 dl/g, determined as above.

The following products were then fed separately into an ICMA S.Giorgio MC 33 twin-screw extruder equipped with gravimetric dosage equipment:

a) 70% by weight of the polyethyleneterephthalate containing $Sm(AcAc)_3$ previously prepared,

b) 30% by weight of polycarbonate having an intrinsic viscosity of 0.61 dl/g determined as described above, sold by Enichem under the trade-name of Sinvet 250$^R$;

the percentages referring to the total of the mixture consisting of a) and b). The content of samarium (acetylacetonate) in the mixture was therefore 0.045% by weight.

The operating conditions of the extruder were fixed at 265 °C and 0.98 bar, with a screw rate of 100 rpm and a flow rate of 4.5 Kg/h. Under these conditions the average residence time of the molten mixture in the extruder was about 56 seconds.

The resulting mixture, after granulation and further drying in an oven for 16 hours at 120 °C, was dry mixed with 0.6 phr of a 1/1 mixture by weight of antioxidants Ultranox 626$^R$ and Irganox 1010$^R$, and was then re-extruded with the same extruder and under the same operating conditions defined above, except for the temperature which was regulated at 240 °C.

The extruded and granulated material, resulting to be a polyester-polycarbonate copolymer, was then injection moulded and characterized according to the methods listed above. The results are shown in column 1 of table 1.

EXAMPLES 2-3

The same procedure as example 1 was repeated using different ratios of PET and polycarbonate in the feeding, according to what is indicated in table 1 below, respectively in columns 2 and 3, together with the relative characterization results.

COMPARATIVE EXAMPLES

For comparative purposes three compositions COMP 1, COMP 2 and COMP 3 were prepared, following the same procedure and with the same quantities of PET and polycarbonate used in the previous examples 1, 2 and 3 respectively, but without adding any transesterification catalyst. The resulting compositions, after granulation, drying and addition of the antioxidants Ultranox 626[R] and Irganox 1010[R] in the quantities specified above, were re-extruded using the same extruder at an operating temperature regulated at 260 °C.

The characterization results are shown in table 1.

For the same comparative purpose, two samples of the same PET and the same polycarbonate respectively used in the previous examples were subjected to the same treatment of double extrusion and granulation and then characterized in accordance with what is indicated in table 1 under the PET and PC columns respectively.

The results shown in table 1 show the special advantages of the process of the present invention. The copolymer obtained according to examples 1, 2 and 3 proves to consist of blocks of PET and PC, as can be deduced by the low values of intrinsic viscosity obtained after selective degradation. This polymer is at the same time homogeneous, as shown by the presence of a single glass transition temperature, considerably higher than that of the PET, whereas the samples obtained according to comparative examples COMP 1, COMP 2 and COMP 3 are heterogeneous and have two $T_g$ values, of which one is very close to the $T_g$ of the PET. This shows that the heterogeneous mixtures obtained without the use of the catalytic component (c) of the present invention, radically change the thermal behaviour to temperatures resembling those of the PET, and cannot be used, for example, for the packaging of liquid substances at temperatures of between 70 and 90 °C, whereas the copolymers obtained according to examples 1, 2 and 3 can.

The copolymers of the present invention, particularly those with PET blocks containing on an average more than 10 monomeric units, also have a better resistance to solvents with respect to the compositions of the comparative examples and the polycarbonate itself, as shown by the results relating to solubility in dichloromethane. For further clarity, the latter results are also shown in graphic form in Figure 1, which shows the solubility values in dichloromethane of the various samples prepared as described above.

EXAMPLES 4-6

The previous example 2 was repeated following the same procedure and using the same quantities of the different components, except that the transesterification catalyst was added in different quantities according to what is indicated in table 2 below, which, to facilitate a comparison of results, also shows the data relating to the previous examples 2 and COMP 2.

TABLE 1

| EXAMPLES | | PET | COMP 1 | 1 | COMP 2 | 2 | COMP 3 | 3 | PC |
|---|---|---|---|---|---|---|---|---|---|
| COMPONENTS | UNIT | | | | | | | | |
| PET | (%) | 100 | 70 | 70 | 50 | 50 | 30 | 30 | 0 |
| PC | (%) | 0 | 30 | 30 | 50 | 50 | 70 | 70 | 100 |
| Sm(acetylacetonate)3(*) | (phr) | 0 | 0 | 0.045 | 0 | 0.045 | 0 | 0.045 | 0 |
| ULTRANOX 626 | (phr) | 0.3 | 0.3 | 0.3 | 0.3 | 0.3 | 0.3 | 0.3 | 0.3 |
| IRGANOX 1010 | (phr) | 0.3 | 0.3 | 0.3 | 0.3 | 0.3 | 0.3 | 0.3 | 0.3 |
| PROPERTY | | | | | | | | | |
| VICAT 5 Kg | (C°) | 75 | 81 | 89 | 95 | 101 | 135 | 116 | 146 |
| HDT 1.82 MPa | (C°) | 63 | 66 | 70 | 76 | 81 | 104 | 94 | 123 |
| Tg (I) | (C°) | 84.0 | 85 | 94 | 86 | 109 | 87 | 128 | 144 |
| Tg (II) (**) | (C°) | -- | 144 | -- | 143 | -- | 145 | -- | -- |
| T (cryst.) DSC | (C°) | 135 | 142 | 165 | 144 | 183 | 145 | 200 | -- |
| T (melt.) DSC | (C°) | 250 | 250 | 235 | 249 | 232 | 249 | 230 | -- |
| MFI (1.2 Kg, 275°C) | (g/10') | 27.6 | 34.9 | 26.5 | 36.0 | 30.3 | 14.3 | 16.1 | 2.1 |
| Solubility in $CH_2Cl_2$ | (%) | 0 | 28 | 10 | 48 | 26 | 72 | 48 | 100 |
| Intr. Visc. Composit. | (dl/g) | 0.65 | 0.63 | 0.60 | 0.60 | 0.55 | 0.61 | 0.61 | 0.61 |
| Intr. Visc. PET blocks | (dl/g) | 0.65 | 0.63 | 0.33 | 0.60 | 0.28 | 0.58 | 0.26 | -- |

(*) The quantities in phr of catalyst, ULTRANOX 626 and IRGANOX 1010 refer, in each example, to 100 parts by weight of the mixture consisting of PET and PC.
(**) Transition at higher temperature in heterogeneous compositions, relating to phases rich in PC.

TABLE 2

| COMPONENTS | UNIT | COMP 2 | 4 | 5 | 2 | 6 |
|---|---|---|---|---|---|---|
| PET | (%) | 50 | 50 | 50 | 50 | 50 |
| PC | (%) | 50 | 50 | 50 | 50 | 50 |
| Sm(Acetylacetonate)3 (*) | (phr) | 0 | 0.015 | 0.030 | 0.045 | 0.090 |
| ULTRANOX 626 (*) | (phr) | 0.3 | 0.3 | 0.3 | 0.3 | 0.3 |
| IRGANOX 1010 (*) | (phr) | 0.3 | 0.3 | 0.3 | 0.3 | 0.3 |
| PROPERTY | | | | | | |
| VICAT 5 Kg | | 95 | 98 | 105 | 101 | 101 |
| HDT 1.82 MPa | (C°) | 76 | 78 | 81 | 81 | 81 |
| Tg (I) | (C°) | 86 | 90 | 97 | 109 | 109 |
| Tg (II) (**) | (C°) | 143 | -- | -- | -- | -- |
| T (cryst.) DSC | (°C) | 144 | 143 | 177 | 183 | 194 |
| T (melt.) DSC | (°C) | 249 | 248 | 238 | 232 | 232 |
| MFI (1.2 Kg, 275°C) | (g/10') | 36 | 30 | 31 | 30 | 33 |
| Solubility in CH2Cl2 | (%) | 48 | 45 | 29 | 26 | 23 |
| Intrinsic Viscosity | (dl/g) | 0.60 | 0.63 | 0.62 | 0.55 | 0.59 |

(*) The quantities in phr of catalyst, ULTRANOX 626 and IRGANOX 1010 refer, in each example, to 100 parts by weight of the mixture consisting of PET and PC.

(**) Transition at higher temperature in heterogeneous compositions, relating to phases rich in PC.

EXAMPLES 7-8

Example 2 above was repeated following the same procedure and using the same quantities of the different components, but using in each case a different catalytic component (c), as shown in table 3 below.

In particular the following catalysts were used, whose preparation is described above:
EXAMPLE 7 Lanthanium tris(acetylacetonate) $La(AcAc)_3$
EXAMPLE 8 Lead bis(acetylacetonate) $Pb(AcAc)_2$

Table 3 also repeats, to provide homogeneous results, the results relating to example 2 above. The quantities by weight (phr) of each catalyst in table 3 all correspond to the same molar quantity of complex used.

TABLE 3

| EXAMPLES | | 2 | 7 | 8 |
|---|---|---|---|---|
| COMPONENTS | UNIT | | | |
| PET | (%) | 50 | 50 | 50 |
| PC | (%) | 50 | 50 | 50 |
| Catalyst | | Sm(AcAc)3 | La(AcAc)3 | Pb(AcAc)2 |
| Quantity | (phr) | 0.045 | 0.045 | 0.037 |
| ULTRANOX 626 (*) | (phr) | 0.3 | 0.3 | 0.3 |
| IRGANOX 1010 (*) | (phr) | 0.3 | 0.3 | 0.3 |
| PROPERTY | | | | |
| VICAT 5 Kg | (C°) | 101 | 108 | 106 |
| HDT 1.82 MPa | (C°) | 81 | 80 | 80 |
| Tg | (C°) | 109 | 111 | 111 |
| MFI (1.2 Kg, 275°C) | (g/10') | 30 | 29 | 18 |
| Solubility in CH2Cl2 | (%) | 26 | 24 | 23 |
| Intrinsic Viscosity | (dl/g) | 0.55 | 0.58 | 0.59 |

(*) The quantities in phr of catalyst, ULTRANOX 626 and IRGANOX 1010 refer, in each example, to 100 parts by weight of the mixture consisting of PET and PC.

EXAMPLES 9 AND COMP 9

Example 1 above was repeated using the same procedure and with the same equipment, but using a recycled polyethyleneterephthalate coming from drink containers, having an intrinsic viscosity of 0.83 dl/g, determined as above, instead of the commercial PET in granular form. The recycled PET was crushed into average dimensions of about 2-3 mm before being dry mixed with the catalyst. The catalyst $Sm(AcAc)_3$ and the polycarbonate are the same and in the same quantities as example 1. The copolymer thus obtained was characterized as specified in table 4.

For comparative purposes, a second sample of the same recycled PET was treated in the same way (double extrusion), but without the dry mixing step of the catalyst. The polymeric composition thus obtained had the characteristics shown in table 4, under column COMP 10.

TABLE 4

| EXAMPLES | | 9 | COMP 9 |
|---|---|---|---|
| COMPONENTS | UNIT | | |
| PET (recicle) | (%) | 50 | 50 |
| PC | (%) | 50 | 50 |
| Sm(AcAc)3 | (phr) | 0.045 | -- |
| ULTRANOX 626 (*) | (phr) | 0.3 | 0.3 |
| IRGANOX 1010 (*) | (phr) | 0.3 | 0.3 |
| PROPERTY | | | |
| VICAT 5 Kg | (C°) | 103 | 91 |
| HDT 1.82 MPa | (C°) | 84 | 75 |
| T (cryst.) DSC | (C°) | 183 | 144 |
| T (melt.) DSC | (C°) | 236 | 245 |
| MFI (1.2 Kg, 275°C) | (g/10') | 19 | 20 |
| Solubility in CH2Cl2 | (%) | 27 | 50 |
| Intrinsic Viscosity | (dl/g) | 0.69 | 0.63 |

(*) The quantities in phr of catalyst, ULTRANOX 626 and IRGANOX 1010 refer, in each example, to 100 parts by weight of the mixture consisting of PET and PC.

## Claims

1. Process for the preparation of a thermoplastic polymeric composition, homogeneous in the molten state, starting from aromatic polycarbonates and polyesters, having an improved combination of mechanical, chemical, thermal and electrical properties and a high stability during processing in the molten state, comprising contacting in the molten state:

   (a) at least one aromatic polycarbonate basically consisting of repetitive units comprised in the following general formula (I):

$$-(Ar-O-\overset{\overset{O}{\|}}{C}-O-)- \qquad (I)$$

   wherein "Ar" is a divalent aromatic radical having from 6 to 30 carbon atoms, deriving from a compound having two phenolic hydroxylic groups,

(b) at least one aromatic polyester,

for a period at least sufficient to make the molten mixture of (a) and (b) homogeneous, in the presence of a catalytic component (c) consisting of at least one metal salt or complex selected from the group comprising:

i) salts or complexes of a metal selected from lanthanium and other elements of the group of lanthanides (or rare earth metals), the atomic numbers of which are between 58 and 71 in the periodic table, said metal salts or complexes being soluble in (a) and/or in (b) or in the mixture of (a) and (b) in the molten state;

ii) salts or complexes of a metal selected from groups IIA, IIIA, IVA, VA of the periodic table, and the transition metals, which metallic salts or complexes are soluble in (a) and/or (b) or in the mixture of (a) and (b) in the molten state, and including at least one anion deriving from a carboxylic acid, or a bidentate anionic ligand;

said catalytic component being added in a quantity of from 0.005 to 0.5 parts per 100 parts by weight of the mixture consisting of (a) and (b).

**2.** Process according to claim 1, wherein the metallic salt or complex (i) is selected from lanthanium, neodymium, praseodymium, samarium, europium, gadolinium, terbium, disprosium, holmium, erbium, tulium, ytterbium and lutetium.

**3.** Process according to claim 2, wherein said metal is lanthanium, cerium, samarium or europium.

**4.** Process according to claim 1, wherein the catalytic component (c) is selected from organic salts having the following formula (II):

$MY_pL_q$ (II)

wherein:

each Y independently represents an organic anion deriving from an aliphatic, cyclo-aliphatic or aromatic carboxylic acid;

M is a metal selected from the metals of groups IIA, IIIA, IVA, VA of the periodic table, the transition metals or metals of the group of lanthanides;

each L is independently a neutral ligand

"p" is the oxidation state of the metal M and may be an integer of from 2 to 4 depending on M,

"q" is an integer so that the sum of "p + q" is a whole number of between "p" and 8 (including extremes).

**5.** Process according to claim 4, wherein M is selected from germanium, tin, lead, lanthanium, cerium, samarium or europium.

**6.** Process according to claim 1, wherein the catalytic component (c) is selected from metal complexes having the following formula (III):

$B_iM'L'_j$ (III)

wherein M' is a metal selected from the metals of groups IIA, IIIA, IVA, VA of the periodic table, or from transition metals or from metals of the group of lanthanides;

each L' is, independently, a neutral ligand, B is a bidentate anionic ligand,

"i" is the oxidation state of metal M' and may assume whole values of from 2 to 4 depending on the specific metal M', and

"j" is an integer so that the sum "2i"+j has values of between "2i" and 8, preferably between "2i" and 6 (including extremes).

**7.** Process according to claim 6, wherein M' is selected from germanium, tin, lead, lanthanium, cerium, samarium or europium.

**8.** Process according to claim 6, wherein the metal M' in formula (III) is selected from lead, lanthanium, samarium and europium.

**9.** Process according to any of the previous claims 6 to 8, wherein the bidentate anionic ligand B in formula (III) is selected from acetylsalicylate, aectylacetonate, orthoformylphenolate, 2-pyridylcarboxylate, aminoacetate, 3-aminopropionate and 2-aminophenolate.

**10.** Process according to any of the previous claims 6 to 9, wherein the metal complex having formula (III) is selected from: La(acetylacetonate)$_3$, Pb(acetylacetonate)$_3$, Eu(acetylacetonate)$_3$-dipyridyl, Eu(2-formylphenolate)$_3$, Sm(acetylacetonate)$_3$, Sm(acetylacetonate)$_3$dipyridyl, Sm(2-formylphenolate)$_3$ and La-(2-formylphenolate)$_3$.

**11.** Process according to any of the previous claims, wherein the catalytic component (c) is added in a quantity of from 0.01 to 0.1% by weight with respect to the weight of the mixture consisting of (a) and (b).

**12.** Process according to any of the previous claims, wherein the aromatic polycarbonate (a) is a polycarbonate deriving from the condensation of a bisphenol, preferably bisphenol A, with a precursor of carbonic acid.

**13.** Process according to any of the previous claims, wherein the aromatic polyester (b) is polyethyleneterephthalate.

**14.** Process according to any of the previous claims, wherein the weight ratio between aromatic polycarbonate (a) and aromatic polyester (b) is between 10/90 and 90/10.

**15.** Process according to any of the previous claims, wherein the weight ratio between aromatic polycarbonate (a) and aromatic polyester (b) is between 15/85 and 40/60.

**16.** Process according to any of the previous claims, wherein the contact of components (a) and (b) is carried out by mixing them in the molten state at temperatures of between 200 and 300 °C, for a period of between 0.5 and 10 minutes.

**17.** Process according to claim 16, wherein the mixing in the molten state of components (a) and (b) is carried out in a single or twin-screw extruder, for a period of between 0.5 and 5 minutes.

**18.** Process according to any of the previous claims, wherein the catalytic component (c) is dry mixed with one of components (a) or (b), preferably (b), and the resulting mixture is mixed in the molten state with the remaining component (b) or (a).

**19.** Process according to any of the previous claims, comprising the further addition and incorporation in the thermoplastic polymeric composition of at least one polymeric additive, before, during or after the mixing in the molten state of (a), (b) and (c).

**20.** Process according to claim 19, wherein the polymeric additive is added in a quantity of up to 30% by weight with respect to the total weight of components (a) and (b).

**21.** Thermoplastic polymeric composition mainly consisting of an ester-carbonate copolymer, characterized in that it is obtained by the process according to any of the previous claims 1 to 20.

**22.** Polymeric composition according to claim 21, characterized in that the ester-carbonate copolymer is a block copolymer.

**23.** Polymeric composition according to claim 22, characterized in that the copolymer basically consists of blocks of polycarbonate from bisphenol A and blocks of polyethyleneterephthalate (PET) whose weight ratio is between 15/85 and 40/60, and the average molecular weight of the PET blocks is between 2,000 and 15,000.

**24.** Process for the recovery and recycling of waste aromatic polycarbonate and/or polyester, to obtain an ester-carbonate copolymer, comprising contacting in the molten state:

(a') at least one aromatic polycarbonate basically consisting of repetitive units of general formula (I) as previously defined in claim 1,

(b') at least one aromatic polyester,

for a period which is at least sufficient to make the molten mixture of (a') and (b') homogeneous, in the presence of a catalytic component (c) consisting of at least one salt or metal complex selected from the following groups:

i) salts or complexes of a metal selected from lanthanium and other elements of the group of lanthanides (or rare earth metals), the atomic numbers of which are between 58 and 71 in the periodic table, said metal salts or complexes being soluble in (a') and/or in (b') or in the mixture of (a') and (b') in the molten state;

ii) salts or complexes of a metal selected from groups IIA, IIIA, IVA, VA of the periodic table, the transition metals, which metallic salts or complexes are soluble in (a') and/or in (b') or in the mixture of (a') and (b') in the molten state, and including at least one anion deriving from a carboxylic acid, or a bidentate anionic ligand;

said catalytic component (c) being added in a quantity of from 0.005 to 0.5 parts per 100 parts by weight of the mixture consisting of (a') and (b'), in which at least one of components (a') or (b') totally or partly consists of said waste aromatic polycarbonate or polyester, respectively.

**25.** Process according to claim 24 for the recovery and recycling of waste polyethyleneterephthalate (PET), wherein component (b') totally or partly consists of waste PET.

**26.** Process according to the previous claims 24 or 25, wherein components (a') and (b') each respectively consist of at least 50% by weight of waste aromatic polycarbonate and at least 50% by weight of waste aromatic polyester.

FIGURE 1

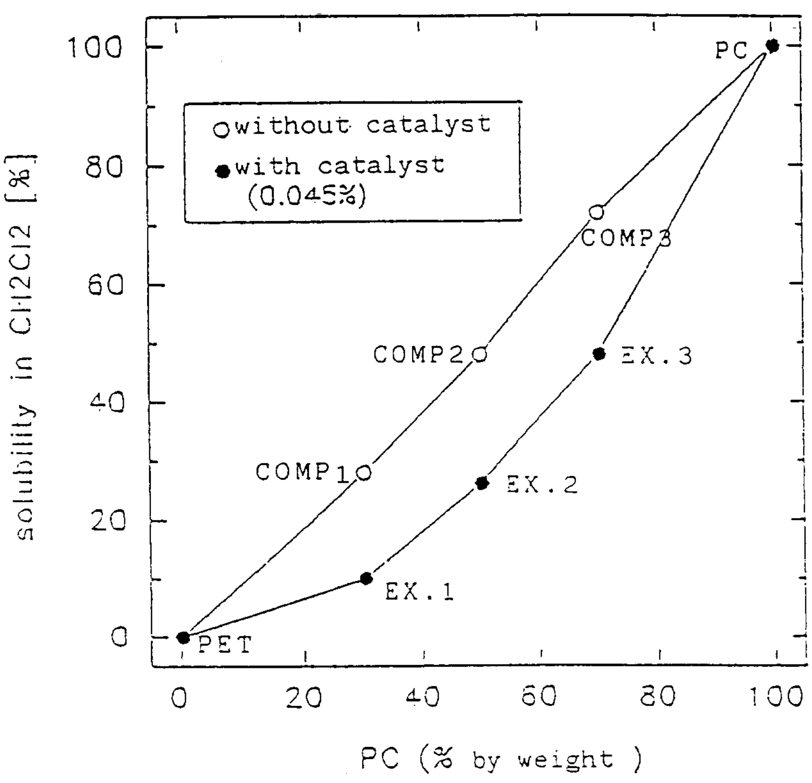
without catalyst
with catalyst
(0.045%)
PC
COMP3
COMP2
EX.3
COMP1
EX.2
EX.1
PET
100
80
60
40
20
0
0
20
40
60
80
100
solubility in CH2Cl2 [%]
PC (% by weight )

European Patent Office

# EUROPEAN SEARCH REPORT

Application Number
EP 94 11 4107

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-A-32 47 927 (BAYER AG)<br>* claims 1-4 * | 1,4-7,9, 11-17,20 | C08L69/00<br>C08G81/00<br>C08G63/64<br>C08G63/84 |
| X | DATABASE WPI<br>Derwent Publications Ltd., London, GB;<br>AN 89-237790(33)<br>& JP-A-1 172 449 (MITSUBISHI GAS CHEM KK)<br>7 July 1989<br>* abstract * | 1,4,5, 11-18,21 | |
| A | WO-A-91 09911 (EASTMAN KODAK CO.)<br>* claims 1,5 * | 1,21 | |
| A | EP-A-0 303 935 (BAYER AG)<br>* page 5, line 55 - line 57 * | 1-3,8,10 | |
| E | EP-A-0 626 425 (ENICHEM S.P.A.)<br>*Whole document* | 1-23 | |

TECHNICAL FIELDS SEARCHED (Int.Cl.6)

C08L
C08G

The present search report has been drawn up for all claims

| Place of search | Date of completion of the search | Examiner |
|---|---|---|
| THE HAGUE | 14 September 1995 | O'Sullivan, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)